(19)

Europäisches
Patentamt
European
Patent Office
Office européen
des brevets

(11) **EP 2 457 933 B1**

(12) **EUROPEAN PATENT SPECIFICATION**

(45) Date of publication and mention
of the grant of the patent:
**17.02.2016 Bulletin 2016/07**

(21) Application number: **10802336.7**

(22) Date of filing: **23.07.2010**

(51) Int Cl.:
*C08F 220/42* (2006.01)      *C09J 109/04* (2006.01)
*C09J 161/12* (2006.01)      *C08C 19/02* (2006.01)
*C09J 113/02* (2006.01)

(86) International application number:
**PCT/JP2010/062405**

(87) International publication number:
**WO 2011/010716 (27.01.2011 Gazette 2011/04)**

(54) **LATEX AND ADHESIVE COMPOSITION**

LATEX UND HAFTZUSAMMENSETZUNG DAMIT

COMPOSITION DE LATEX ET COMPOSITION ADHÉSIVE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **24.07.2009 JP 2009172738**

(43) Date of publication of application:
**30.05.2012 Bulletin 2012/22**

(73) Proprietor: **Zeon Corporation
Tokyo 100-8246 (JP)**

(72) Inventors:
• **SENDA, Osamu
Tokyo 100-8246 (JP)**

• **NAKASHIMA, Tomonori
Tokyo 100-8246 (JP)**

(74) Representative: **Beckmann, Claus
Kraus & Weisert
Patentanwälte PartGmbB
Thomas-Wimmer-Ring 15
80539 München (DE)**

(56) References cited:
**EP-A1- 0 704 459      EP-A1- 0 747 458
JP-A- 1 153 741      JP-A- 1 153 868
JP-A- 1 203 731      JP-A- 8 100 025
JP-A- 8 100 160      JP-A- 8 333 564
JP-A- 63 113 065**

**Description**

TECHNICAL FIELD

The present invention relates to an adhesive composition containing a latex of highly saturated nitrile rubber.

BACKGROUND ART

Automobile timing belts, poly ribbed belts, lapped belts, V-belts, etc. are comprised of composites of woven fabric base materials and rubber (rubber-fiber composites). As the rubber forming the rubber-fiber composites, in the past, mainly the oil resistant rubber of chloroprene rubber (CR) or acrylonitrile-butadiene copolymer rubber (NBR) has been used. On the other hand, in recent years, to deal with automotive emission regulations, the smaller engine compartments for lightening the weight of automobiles, the closed engine compartments for reducing noise, etc., heat resistance is demanded. Recently, as the rubber forming the rubber-fiber composites, nitrile-group-containing highly saturated copolymer rubber provided with both heat resistance and oil resistance has been used preferably.

In the rubber-fiber composites, to mitigate the abrasion due to intermeshing with gears and, further, to improve the adhesive strength between the woven fabric of the base member and the rubber member, a solvent-based rubber glue comprised of rubber dissolved in an organic solvent has been coated on the woven fabric and the woven fabric then heated. However, on the other hand, recently, from the viewpoint of preventing pollution of the environment by organic solvents etc., treatment by a water-based rubber glue has been studied.

For example, Patent Document 1 discloses an adhesive composition containing a highly saturated nitrile rubber latex and a resorcinol-formaldehyde resin. However, when using a fiber base material-highly saturated nitrile rubber composite, obtained by using this adhesive composition to bond a fiber base material and highly saturated nitrile rubber, as an oil belt of an automobile, the oil resistance of the adhesive layer has been poor and as a result the oil resistance as an oil belt was not sufficient.

EP 0 747 458 describes an adhesive composition comprised of (A) a latex of 100 wt. parts of a carboxyl group-containing highly saturated nitrile-conjugated diene copolymer rubber, (B) 5 - 30 wt. parts of a resorcinol-formaldehyde resin, and (C) 2 - 10 wt. parts of an aromatic epoxy resin and a composite comprised of a nitrile group-containing highly saturated copolymer rubber and a fibrous material, which has been treated with the adhesive composition. This composite is useful for belts.

EP 0 704 459 describes a nitrile group-containing highly saturated copolymer rubber which is a hydrogenated product of an unsaturated nitrile-conjugated diene copolymer. The highly saturated copolymer rubber has an alkylthio group having 12 to 16 carbon atoms, which include at least three tertiary carbon atoms, and having a sulfur atom which is directly bound to at least one of the tertiary carbon atoms, and the highly saturated copolymer rubber further has a Mooney viscosity of 15 to 200 and an iodine value not larger than 80. The highly saturated copolymer rubber is produced by copolymerizing an unsaturated nitrile and a conjugated diene by using as a specific alkylthiol molecular weight modifier. The highly saturated copolymer rubber exhibits a high-rate vulcanizability with a sulfur-containing vulcanizer.

PRIOR ART DOCUMENTS

PATENT DOCUMENTS

Patent Document 1: Japanese Patent Publication (A) No. 63-248879 (U.S. Patent No. 5,017,639)

DISCLOSURE OF THE INVENTION

PROBLEM TO BE SOLVED BY THE INVENTION

Therefore, the object of the present invention is to provide an adhesive composition able to form an adhesive layer excellent in oil resistance containing a latex of a highly saturated nitrile rubber.

MEANS FOR SOLVING THE PROBLEMS

The inventors engaged in intensive studies of the highly saturated nitrile rubber forming the latex constituting an ingredient of an adhesive composition for achieving the above object and as a result discovered that by using a latex of a highly saturated nitrile rubber having a specific amount of tetrahydrofuran insolubles, the above characteristics are improved and, based on this discovery, completed the present invention.

Therefore, according to the present invention, there is provided an adhesive composition containing a latex of a highly saturated nitrile rubber wherein said latex of highly saturated nitrile rubber is obtained by copolymerizing $\alpha,\beta$-ethylenically unsaturated nitrile monomer, acid-group-containing $\alpha,\beta$-ethylenically unsaturated monomer, and diene and/or $\alpha$-olefin, and another monomer, used in accordance with need, able to copolymerize with these monomers, in the presence of molecular weight adjuster in an amount of 0.25 to 0.55 parts by weight, with respect to 100 parts by weight of the total monomer which is used for copolymerization, and said highly saturated nitrile rubber comprises $\alpha,\beta$-ethylenically unsaturated nitrile monomer units in 30 to 55 wt%, acid-group-containing $\alpha,\beta$-ethylenically unsaturated monomer units in 3 to 20 wt%, wherein an iodine value is 120 or less, and a tetrahydrofuran insoluble fraction is 30 to 70 wt%. Preferably, the acid-group-containing $\alpha,\beta$-ethylenically unsaturated monomer units are $\alpha,\beta$-ethylenically unsaturated monomer units which have carboxyl groups.

The adhesive composition of the present invention more preferably further contains a resorcinol-formaldehyde resin. The content of the resorcinol-formaldehyde resin is more preferably 5 to 30 parts by weight with respect to 100 parts by weight of solid content of the latex of the highly saturated nitrile rubber.

EFFECTS OF THE INVENTION

The adhesive composition of the present invention using the latex of a highly saturated nitrile rubber used in the present invention can form an adhesive layer with excellent oil resistance. Further, by using the adhesive composition of the present invention as an adhesive, it is possible to obtain a composite excellent in oil resistance and useful for an oil contact member, in particular, an oil belt, for automobile use etc.

DESCRIPTION OF EMBODIMENTS

<Latex of Highly Saturated Nitrile Rubber>

The highly saturated nitrile rubber forming the latex of the highly saturated nitrile rubber used in the present invention has $\alpha,\beta$-ethylenically unsaturated nitrile monomer units in 30 to 55 wt%, has acid-group-containing $\alpha,\beta$-ethylenically unsaturated monomer units in 3 to 20 wt%, has an iodine value of 120 or less, and has a tetrahydrofuran insoluble fraction of 30 to 70 wt%.

The $\alpha,\beta$-ethylenically unsaturated nitrile monomer forming the $\alpha,\beta$-ethylenically unsaturated nitrile monomer units is not particularly limited, but monomers containing 3 to 18 carbon atoms are preferable, while monomers containing 3 to 9 carbon atoms are more preferable. As specific examples, acrylonitrile, methacrylonitrile, $\alpha$-chloroacrylonitrile, etc. may be mentioned. Among these, acrylonitrile is preferred. These $\alpha,\beta$-ethylenically unsaturated nitrile monomers may be used alone or may be used in combinations of two or more types.

The content of the $\alpha,\beta$-ethylenically unsaturated nitrile monomer units in the highly saturated nitrile rubber forming the latex used in the present invention has to be 30 to 55 wt%, but is preferably 32 to 45 wt%. If the content of $\alpha,\beta$-ethylenically unsaturated nitrile monomer units is too small, the highly saturated nitrile rubber is liable to deteriorate in oil resistance, while conversely if too great, the cold resistance may fall.

The acid-group-containing $\alpha,\beta$-ethylenically unsaturated monomer forming the acid-group-containing $\alpha,\beta$-ethylenically unsaturated monomer units is a monomer containing an $\alpha,\beta$-ethylenically unsaturated bond and acid group in the molecule. The acid group is not particularly limited. Any of a carboxyl group, sulfonic acid group, phosphoric acid group, etc. is possible, but a carboxyl group is preferred. As the acid-group-containing $\alpha,\beta$-ethylenically unsaturated monomer, monomers containing 3 to 18 carbon atoms are preferable, while monomers containing 3 to 9 carbon atoms are more preferable.

As the $\alpha,\beta$-ethylenically unsaturated monomer having a carboxyl group, in addition to $\alpha,\beta$-ethylenically unsaturated monocarboxylic acid, $\alpha,\beta$-ethylenically unsaturated dicarboxylic acid, and $\alpha,\beta$-ethylenically unsaturated dicarboxylic acid monoester, an $\alpha,\beta$-ethylenically unsaturated dicarboxylic acid anhydride which can change to a compound having a carboxyl group may be mentioned.

As the $\alpha,\beta$-ethylenically unsaturated monocarboxylic acid, acrylic acid, methacrylic acid, ethacrylic acid, crotonic acid, cinnamic acid, etc. may be illustrated.

As the $\alpha,\beta$-ethylenically unsaturated dicarboxylic acid, maleic acid, fumaric acid, itaconic acid, citraconic acid, chloromaleic acid, etc. may be illustrated.

As the $\alpha,\beta$-ethylenically unsaturated dicarboxylic acid monoester, monomethyl maleate, monoethyl maleate, monobutyl maleate, monocyclohexyl maleate, monomethyl fumarate, monoethyl fumarate, monobutyl fumarate, mono-2-hydroxyethyl fumarate, monocyclohexyl fumarate, monomethyl itaconate, monoethyl itaconate, monobutyl itaconate, etc. may be illustrated.

As the $\alpha,\beta$-ethylenically unsaturated dicarboxylic acid anhydride, maleic anhydride, itaconic anhydride, citraconic anhydride, etc. may be mentioned.

The content of the acid-group-containing $\alpha,\beta$-ethylenically unsaturated monomer units in the highly saturated nitrile rubber forming the latex used in the present invention has to be 3 to 20 wt%, but is preferably 3 to 10 wt%. By copolymerizing the acid-group-containing $\alpha,\beta$-ethylenically unsaturated monomer in the above range, it is possible to improve the adhesiveness and abrasion resistance.

The highly saturated nitrile rubber forming the latex used in the present invention preferably has diene monomer units and/or $\alpha$-olefin monomer units from the viewpoint of improvement of the adhesiveness due to the rubber elasticity. As the diene monomer forming the diene monomer units, 1,3-butadiene, isoprene, 2,3-dimethyl-1,3-butadiene, 1,3-pentadiene, or other conjugated dienes containing 4 or more carbon atoms; 1,4-pentadiene, 1,4-hexadiene, and other unconjugated dienes containing 5 to 12 carbon atoms may be mentioned. Among these, conjugated dienes are preferred. 1,3-butadiene is more preferred.

As the $\alpha$-olefin monomer forming the $\alpha$-olefin monomer units, preferably monomers containing 2 to 12 carbon atoms such as ethylene, propylene, 1-butene, 4-methyl-1-pentene, 1-hexene, 1-octene, etc. may be illustrated.

The content of the diene monomer units and/or $\alpha$-olefin monomer units in the highly saturated nitrile rubber forming the latex used in the present invention is preferably 25 to 67 wt%, particularly preferably 45 to 65 wt%.

The highly saturated nitrile rubber forming the latex used in the present invention is obtained by copolymerizing, in addition to the $\alpha,\beta$-ethylenically unsaturated nitrile monomer, acid-group-containing $\alpha,\beta$-ethylenically unsaturated monomer, and diene and/or $\alpha$-olefin, a monomer able to copolymerize with these monomers (hereinafter, referred to as "other comonomer"). The amount of the other comonomer units is preferably 0 to 10 wt% in the highly saturated nitrile rubber.

As the other comonomer, an aromatic vinyl, $\alpha,\beta$-ethylenically unsaturated monocarboxylic acid ester, fluoroolefin, copolymeric antiaging agent, etc. may be mentioned.

The aromatic vinyl includes styrene and styrene derivatives containing 8 to 18 carbon atoms. As specific examples of the styrene derivatives, $\alpha$-methylstyrene, vinylpyridine, etc. may be mentioned.

The $\alpha,\beta$-ethylenically unsaturated monocarboxylic acid ester is an ester of an $\alpha,\beta$-ethylenically unsaturated monocarboxylic acid and an aliphatic alcohol containing 1 to 12 carbon atoms. As specific examples, methyl (meth)acrylate (meaning methyl acrylate and/or methyl methacrylate, same below), butyl (meth)acrylate, methoxyethyl (meth)acrylate, trifluoroethyl (meth)acrylate, tetrafluoropropyl (meth)acrylate, etc. may be illustrated.

Fluoroolefin is a unsaturated fluoro compound containing 2 to 12 carbon atoms. As specific examples, difluoroethylene, tetrafluoroethylene, fluoroethyl vinylether, fluoropropyl vinylether, o-trifluoromethylstyrene, vinyl pentafluorobenzoate, etc. may be illustrated.

As specific examples of the copolymeric antiaging agent, N-(4-anilinophenyl)acrylamide, N-(4-anilinophenyl)methacrylamide, N-(4-anilinophenyl)cinnamide, N-(4-anilinophenyl)crotonamide, N-phenyl-4-(3-vinylbenzyloxy)aniline, N-phenyl-4-(4-vinylbenzyloxy)aniline, etc. may be illustrated.

The highly saturated nitrile rubber forming the latex used in the present invention may also, in accordance with need, contain self cross-linkable monomer units. By including self cross-linkable monomer units, the waterproofness can be improved.

As specific examples of the self cross-linkable monomer which forms the self cross-linkable monomer units, N-methylol(meth)acrylamide, N,N'-dimethylol(meth)acrylamide, (meth)acrylamide, N-methoxymethyl (meth) acrylamide, N-ethoxymethyl(meth)acrylamide, N-butoxymethyl(meth)acrylamide, N,N'-methylene bisacrylamide, etc. may be illustrated.

Among these, from the viewpoint of being able to improve the abrasion resistance of the composite which is obtained using the adhesive composition of the present invention, N-methylol(meth)acrylamide having N-methylol groups is suitable.

The content of the self cross-linkable monomer units in the highly saturated nitrile rubber forming the latex used in the present invention is preferably 0 to 20 wt%, more preferably 0 to 10 wt% in range. If this amount is excessively large, the flexibility of the composite which is obtained using the adhesive composition of the present invention is impaired, so this is not preferred.

The highly saturated nitrile rubber forming the latex used in the present invention has a Mooney viscosity ($ML_{1+4}$, 100°C) of preferably 10 to 300, more preferably 20 to 250, particularly preferably 30 to 200. If the Mooney viscosity is too low, the composite which is obtained by adhesion by the adhesive composition of the present invention is liable to fall in mechanical properties. On the other hand, if too high, the workability may deteriorate.

The highly saturated nitrile rubber forming the latex used in the present invention is obtained by copolymerizing the above monomers and, in accordance with need, hydrogenating the carbon-carbon double bonds in the copolymer which is obtained. The polymerization method is not particularly limited, but may be made a known emulsion polymerization method or solution polymerization method, but from the viewpoint of the industrial productivity, the emulsion polymerization method is preferred.

As the method of emulsion polymerization, a conventional known method may be employed.

As the emulsifier which is used for the polymerization, usually an anionic surfactant, cationic surfactant, nonionic surfactant, amphoteric surfactant, etc. may be used. Among these, an anionic surfactant is preferred. Further, the amount of use of the emulsifier is not particularly limited, but from the viewpoint of the adhesive strength at the time of making an adhesive composition, the amount is 1 to 10 parts by weight, preferably 2 to 6 parts by weight in range, with respect to 100 parts by weight of the total monomer which is used for the copolymerization. Further, as a polymerization initiator etc., the one which is usually used in emulsion polymerization can be used.

Further, the polymerization system is also not particularly limited. Any of a batch system, semibatch system, and continuous system is possible. The polymerization temperature and pressure are also not limited.

As the latex of the highly saturated nitrile rubber used in the present invention, the one obtained by hydrogenating the latex of nitrile rubber obtained by emulsion polymerization is preferable. Note that, the amount of the conjugated diene monomer units in the nitrile rubber is small, so when the iodine value of the nitrile rubber which is obtained by emulsion polymerization is the desired numerical value or less, it is not necessarily required to perform hydrogenation.

The average particle size of the latex which is obtained in this way is preferably 0.01 to 0.5 $\mu$m. Further, the solid content concentration of the latex is preferably 50 wt% or less for preventing agglomeration, particularly preferably is 5 to 50 wt%.

The extent of hydrogenation, that is, the iodine value of the highly saturated nitrile rubber, has to be 120 or less, but is preferably 80 or less, more preferably 60 or less, particularly preferably 30 or less. If the iodine value is too high, when forming the adhesive layer by curing the adhesive composition of the present invention, the obtained adhesive layer is liable to fall in heat aging resistance and ozone resistance.

The hydrogenation may be performed by a known method. The oil layer hydrogenation method of solidifying the latex of nitrile rubber obtained by emulsion polymerization, then hydrogenating it by an oil layer, the aqueous layer hydrogenation method of hydrogenating the latex obtained by polymerization as it is, etc. may be mentioned, but among these, the aqueous layer hydrogenation method is preferred.

At the time of hydrogenation by the aqueous layer hydrogenation method of nitrile rubber, diluting the latex of nitrile rubber prepared by emulsion polymerization by the addition of water in accordance with need and performing a hydrogenation reaction is preferred. As the aqueous layer hydrogenation method, there are the aqueous layer direct hydrogenation method of hydrogenation by feeding hydrogen to a reaction system in the presence of a hydrogenation catalyst and the aqueous layer indirect hydrogenation method of hydrogenation by reduction in the presence of the oxidizing agent, reducing agent, and activating agent, but the aqueous layer direct hydrogenation method is more preferred.

The hydrogenation catalyst which is used for the aqueous layer direct hydrogenation method is not particularly limited so long as a compound resistant to decomposition in water. For example, a palladium catalyst etc. may be mentioned.

As specific examples of the palladium catalyst, a palladium salt of formic acid, acetic acid, propionic acid, lauric acid, succinic acid, oleic acid, phthalic acid, or other carboxylic acid; palladium chloride, dichloro(cyclooctadiene)palladium, dichloro(norbornadiene)palladium, ammonium hexachloropalladium (IV), or other palladium chlorinated compound; palladium iodide or other palladium iodinated compound; palladium sulfate dihydrate, etc. may be mentioned.

Among these, a palladium salt of a carboxylic acid, dichloro(norbornadiene)palladium, and ammonium hexachloropalladium (IV) are particularly preferred.

The amount of use of the hydrogenation catalyst may be suitably determined, but is preferably 5 to 6,000 weight ppm, more preferably 10 to 4,000 weight ppm, with respect to the nitrile rubber.

The reaction temperature in the aqueous layer direct hydrogenation method is preferably 0 to 300°C, more preferably 20 to 150°C, particularly preferably 30 to 100°C. If the reaction temperature is too low, the reaction rate is liable to fall. Conversely, if too high, a secondary reaction such as hydrogenation of the nitrile groups may occur.

The hydrogen pressure is preferably 0.1 to 30 MPa, more preferably 0.5 to 20 MPa. The reaction time is preferably 1 to 15 hours, particularly preferably 2 to 10 hours.

In the aqueous layer direct hydrogenation method, after the hydrogenation reaction, normally the hydrogenation catalyst in the latex is removed. As the method of removal of the hydrogenation catalyst, for example, it is possible to use the method of adding activated carbon, ion exchange resin, or another adsorbent to the latex after the hydrogenation reaction and stirred to thereby cause the hydrogenation catalyst to be adsorbed at the adsorbent, then filter or separate by centrifugation the latex. Further, it is also possible to add hydrogen peroxide and dimethylglyoxime to the latex after the hydrogenation reaction, adjust the pH to 8 to 11, and heat and stir the mixture to cause the hydrogenation catalyst to precipitate as insolubles in the latex for removal.

Note that, in the aqueous layer direct hydrogenation method, it is also possible not to remove the hydrogenation catalyst but to leave it in the latex.

On the other hand, in the aqueous layer indirect hydrogenation method, the solid content concentration of the latex of nitrile rubber is preferably 1 to 50 wt%, more preferably 1 to 40 wt%.

As the oxidizing agent, oxygen, air, hydrogen peroxide, etc. are used. The amount of use of the oxidizing agent is an amount giving a molar ratio with respect to the carbon-carbon double bonds of, by "oxidizing agent:carbon-carbon double bonds", preferably 0.1:1 to 100:1, more preferably 0.8:1 to 5:1.

As the reducing agent, hydrazine, hydrazine hydrate, hydrazine acetate, hydrazine sulfate, hydrazine hydrochloride, or other hydrazines or compounds releasing hydrazine may be used. The amount of use of the reducing agent is an amount giving a molar ratio with respect to the carbon-carbon double bonds of, by "reducing agent:carbon-carbon double bonds", preferably 0.1:1 to 100:1, more preferably 0.8:1 to 5:1.

As the activating agent, ions of copper, iron, cobalt, lead, nickel, iron, tin, or other metal may be used. The amount of use of the activating agent is an amount giving a molar ratio with respect to the carbon-carbon double bonds of, by "activating agent:carbon-carbon double bonds", preferably 1:1,000 to 10:1, more preferably 1:50 to 1:2.

The hydrogenation reaction in the aqueous layer indirect hydrogenation method is usually in the range of 0°C to the reflux temperature, preferably 0 to 250°C, more preferably 20 to 100°C, particularly preferably 40 to 80°C.

The tetrahydrofuran insoluble fraction of the highly saturated nitrile rubber forming the latex used in the present invention is 30 to 70 wt%, preferably 35 to 65 wt%, more preferably 45 to 60 wt%.

Here, the tetrahydrofuran insoluble fraction is the weight percentage of the insoluble fraction after immersing the highly saturated nitrile rubber in tetrahydrofuran (THF) and allowing it to stand at 25°C for 48 hours, with respect to the amount of the highly saturated nitrile rubber before immersion in THF.

If the tetrahydrofuran insoluble fraction is too small, when forming the adhesive layer by curing the adhesive composition, the obtained adhesive layer deteriorates in oil resistance and the composite obtained by use of the adhesive composition degrades in oil resistance as well. If the tetrahydrofuran insoluble fraction is too large, it is no longer possible to form an adhesive layer with a uniform thickness when used as an adhesive composition. That is, when used as an adhesive composition, sometimes a film cannot be formed.

The tetrahydrofuran insoluble fraction of the highly saturated nitrile rubber forming the latex used in the present invention can be adjusted by, for example, controlling the amount of molecular weight adjuster and final polymerization conversion rate to predetermined ranges at the time of polymerization. Specifically, the amount of use of the molecular weight adjuster which is used at the time of polymerization is 0.25 to 0.55 parts by weight, more preferably 0.35 to 0.48 parts by weight, with respect to 100 parts by weight of the total monomer which is used for polymerization, and the final polymerization conversion rate is preferably made 88 to 92%. As the molecular weight adjuster used at the time of polymerization, t-dodecylmercaptan is preferred.

<Adhesive Composition>

The adhesive composition of the present invention contains the latex of the highly saturated nitrile rubber used in the present invention.

The content of the highly saturated nitrile rubber in the adhesive composition of the present invention (solid content) is preferably 5 to 60 wt%, particularly preferably 10 to 30 wt%.

The adhesive composition of the present invention has the above highly saturated nitrile rubber latex as an essential ingredient, but preferably further contain an adhesive resin.

As the adhesive resin, a resorcinol-formaldehyde resin, melamine resin, epoxy resin, and isocyanate resin can be suitably used, but among these a resorcinol-formaldehyde resin is preferred. As the resorcinol-formaldehyde resin, a known one (for example, the one disclosed in Japanese Patent Publication (A) No. 55-142635) may be used. The reaction ratio of the resorcinol and the formaldehyde is the molar ratio of "resorcinol:formaldehyde", usually 1:1 to 1:5, preferably 1:1 to 1:3.

The resorcinol-formaldehyde resin is used in a ratio, with respect to 100 parts by weight of the solid content of the above latex of the highly saturated nitrile rubber used in the present invention, of usually 5 to 30 parts by weight based on the dry weight, preferably 8 to 20 parts by weight. When this amount of use is excessively large, the adhesive layer becomes too hard and the flexibility is impaired. Due to this, sometimes the abrasion resistance of the composite obtained using the adhesive composition of the present invention falls.

Further, to further improve the adhesive strength of the adhesive composition of the present invention, the compound used in the past such as 2,6-bis(2,4-dihydroxyphenylmethyl)-4-chlorophenol or a similar compound, isocyanate, block isocyanate, ethylene urea, polyepoxide, and modified polyvinyl chloride resin, etc. may be used.

Furthermore, the adhesive composition of the present invention may contain a vulcanization aid. By including a vulcanization aid, it is possible to improve the mechanical strength of a composite obtained using the adhesive composition of the present invention. As the vulcanization aid, p-quinone dioxime or other quinone dioxime; lauryl methacrylate, methyl methacrylate or other methacrylic acid ester; DAF (diallyl fumarate), DAP (diallyl phthalate), TAC (triallyl cyanurate), TAIC (triallyl isocyanurate), or other allyl compound; bismaleimide, phenyl maleimide, N,N-m-phenylene dimaleimide, or other maleimide compound; sulfur; etc. may be mentioned.

<Fiber Base Material-Highly Saturated Nitrile Rubber Composite>

By bonding the fiber base material and the highly saturated nitrile rubber with each other through an adhesive layer formed using the adhesive composition of the present invention, a fiber base material-highly saturated nitrile rubber composite can be obtained.

Note that, below, the highly saturated nitrile rubber which is contained in the latex forming the adhesive composition of the present invention will be explained as the "adhesive highly saturated nitrile rubber", while the highly saturated nitrile rubber forming the rubber layer of the fiber base material-highly saturated nitrile rubber composite will be explained as the "adherend highly saturated nitrile rubber".

The form of the fiber base material-highly saturated nitrile rubber composite is not particularly limited. It is sufficient that the fiber base material and the adherend highly saturated nitrile rubber are bonded with each other through the adhesive layer formed using the adhesive composition of the present invention, but the fiber base material and the adherend highly saturated nitrile rubber bonded together or the adherend highly saturated nitrile rubber in which part or all of the fiber base material is embedded may be illustrated.

The type of the fiber forming the fiber base material is not particularly limited. As specific examples, vinylon fiber, polyester fiber, nylon, aramide (aromatic polyamide), or other polyamide fiber, glass fiber, cotton, rayon, etc. may be mentioned. These are suitably selected in accordance with the application. The form of the fiber base material is not particularly limited. As specific examples, staple fibers, filaments, cords, ropes, woven fabric (sailcloth etc.) etc. may be mentioned. These may be suitably selected in accordance with the application of the fiber base material-highly saturated nitrile rubber composite. For example, it is possible to use a fiber base material in a cord form to obtain a toothed belt made of highly saturated nitrile rubber containing cores. Further, it is possible to use a sailcloth or other base cloth fiber base material to obtain a toothed belt made of highly saturated nitrile rubber covered by the base material.

The adherend highly saturated nitrile rubber used for the fiber base material-highly saturated nitrile rubber composite is a copolymer which is obtained by copolymerizing a conjugated diene and $\alpha,\beta$-ethylenically unsaturated nitrile as essential ingredient monomers, and in accordance with need, copolymerizable monomers, and, in accordance with need, hydrogenating the result. As the copolymerizable monomers, ones similar to the adhesive highly saturated nitrile rubber may be mentioned.

As specific examples of the adherend highly saturated nitrile rubber, a highly saturated butadiene-acrylonitrile copolymer rubber, carboxyl group-containing highly saturated butadiene-acrylonitrile copolymer rubber, highly saturated isoprene-butadiene-acrylonitrile copolymer rubber, highly saturated isoprene-acrylonitrile copolymer rubber, highly saturated butadiene-methyl acrylate-acrylonitrile copolymer rubber, highly saturated butadiene-acrylic acid-acrylonitrile copolymer rubber, highly saturated butadiene-ethylene-acrylonitrile copolymer rubber, butyl acrylate-ethoxyethyl acrylate-vinyl norbornene-acrylonitrile copolymer rubber, etc. may be mentioned.

Among these, in particular, when using a fiber base material-highly saturated nitrile rubber composite for automotive applications, from the oil resistance and heat resistance, highly saturated butadiene-acrylonitrile copolymer rubber is preferred.

The hydrogenation rate of the adherend highly saturated nitrile rubber is, by iodine value, 120 or less, preferably 100 or less, more preferably 80 or less. If the iodine value is too high, the obtained fiber base material-highly saturated nitrile rubber composite is liable to drop in heat resistance.

The content of the acrylonitrile monomer units of the adherend highly saturated nitrile rubber is preferably 10 to 60 wt%, more preferably 12 to 55 wt%, particularly preferably 15 to 50 wt%. If the content of the acrylonitrile monomer units is too small, the fiber base material-highly saturated nitrile rubber composite is liable to deteriorate in oil resistance, while conversely if too great, the cold resistance may fall.

Further, the Mooney viscosity ($ML_{1+4}$, 100°C) of the adherend highly saturated nitrile rubber is preferably 10 to 300, more preferably 20 to 250, particularly preferably 30 to 200. If the Mooney viscosity is too low, the moldability and the mechanical properties are liable to fall, while if too high, the moldability can fall.

The adherend highly saturated nitrile rubber may contain not only a sulfur vulcanizing agent, peroxide-based vulcanizing agent, or other vulcanizing agent, but also other compounding agents usually added at the time of processing rubber, such as carbon black, short fibers, or other reinforcing agent; antiaging agent; plasticizer; pigment; tackifier; processing aid; scorch preventer; etc. suitably added.

The method of obtaining the fiber base material-highly saturated nitrile rubber composite is not particularly limited, but for example it is possible to mention the method of placing the fiber base material, on which the adhesive composition of the present invention is deposited by immersion etc., on the adherend highly saturated nitrile rubber and heating and pressing this.

The pressing may be performed using a press machine, metal rolls, injection molding machine, etc. The pressure at the time of pressing is preferably 0.5 to 20 MPa, more preferably 2 to 10 MPa, the temperature of the heating is preferably 130 to 300°C, more preferably 150 to 250°C, and the operating time is preferably 1 to 180 minutes, more preferably 5 to 120 minutes.

By this method, it is possible to vulcanize and mold the adherend highly saturated nitrile rubber and bond the fiber base material and adherend highly saturated nitrile rubber simultaneously.

Note that, in this case, it is possible to form a mold for realizing the targeted surface shape at the inner surface of the mold part of the press machine or the surface of the rolls so that the adherend highly saturated nitrile rubber which forms the fiber base material-highly saturated nitrile rubber composite has the desired surface shape.

Further, as one embodiment of the fiber base material-highly saturated nitrile rubber, a fiber base material-highly saturated nitrile rubber-fiber base material composite may be mentioned. The fiber base material-highly saturated nitrile rubber-fiber base material composite is, for example, composed by combine a fiber base material (composite of two or more types of textile base materials also possible) and a fiber base material-highly saturated nitrile rubber composite. The fiber base material-highly saturated nitrile rubber-fiber base material composite can be obtained, for example, by depositing the adhesive composition of the present invention on the cores forming the fiber base material and the fiber base material forming the base material, stacking the cores on which the adhesive composition is deposited, the adherend highly saturated nitrile rubber, and the fiber base material on which the adhesive composition is deposited in this order, and hot pressing the stack.

The fiber base material which is treated by the adhesive composition of the present invention is excellent in abrasion resistance and dynamic fatigue resistance. Further, the adherend highly saturated nitrile rubber is excellent in oil resistance, heat resistance, etc., so the fiber base material-highly saturated nitrile rubber composite obtained using the adhesive composition of the present invention is suitable for use as an oil contact member for an automobile, in particular a belt such as a flat belt, V-belt, V-ribbed belt, round belt, angled belt, toothed belt, or other belt and is particularly suitable for an oil belt use.

Further, the fiber base material-highly saturated nitrile rubber composite which is obtained using the adhesive composition of the present invention can be suitably used for a hose, tube, diaphragm, etc. As the hose, a single-tube rubber hose, multilayer rubber hose, knitted reinforced hose, cloth-wrapped reinforced hose, etc. may be mentioned. As the diaphragm, a flat diaphragm, rolling diaphragm, etc. may be mentioned.

The fiber base material-highly saturated nitrile rubber composite which is obtained using the adhesive composition of the present invention can be used not only for the above applications, but also as seals, rubber rolls, or other industrial products. As seals, rotary, rocking, reciprocally moving, and other moving position seals and fixed position seals may be mentioned. As moving position seals, an oil seal, piston seal, mechanical seal, boot, dust cover, diaphragm, accumulator, etc. may be mentioned. As fixed position seals, an O-ring, various gaskets, etc. may be mentioned. As the rubber rolls, rolls of parts of printers, copiers, and other OA equipment; spinning use stretching rolls, spinning use draft rolls, or other textile processing rolls; bridle rolls, snapper rolls, steering rolls, or other ironmaking rolls; etc. may be mentioned.

EXAMPLES

Below, examples will be given to explain the present invention in detail. Note that, the "parts" and "%" are based on weight unless otherwise indicated.

The various properties were evaluated by the following methods:

(1) Copolymer Composition

Latex 100 g was solidified by methanol 1 liter, then was vacuum dried at 60°C. The obtained rubber was analyzed by $^1$H-NMR to find the composition of the copolymer.

(2) Iodine Value

The iodine value of the rubber obtained in the same way as the above (1) was measured based on JIS K 6235.

(3) Tetrahydrofuran Insoluble Fraction

In a polytetrafluoroethylene Petri dish, latex 15 g was placed. This was air dried at 25°C for 2 days, then vacuum dried at 40°C for 24 hours. The obtained rubber 300 mg was precisely weighed and placed in a basket made of 100 mesh stainless steel net. The basket containing the rubber was immersed in 100 ml of tetrahydrofuran and allowed to stand at 25°C for 48 hours. Further, the immersed basket was pulled up from the tetrahydrofuran and air dried, then everything including the basket was vacuum dried at 60°C overnight. After drying, the insoluble fraction remaining in the basket was precisely weighed and the ratio (%) of the rubber weight of the insoluble fraction with respect to the weight before immersion in the tetrahydrofuran was calculated to find the tetrahydrofuran insoluble fraction.

(4) Oil Resistance (%)

An adhesive composition was charged in a horizontally set, stainless steel dish-shaped mold frame with a smooth inside surface and 5 mm depth and allowed to stand for 20°C at a humidity of 65% for 72 hours so as to dry. Next, the dried adhesive composition was peeled off from the frame to obtain a film of a thickness of 0.5 mm. The obtained film was heated in an air circulating oven at 160°C for 30 minutes for curing. Next, from the obtained sheet of cured product, a No. 7 dumbbell shape test piece was cut out and its weight (weight before immersion) measured. Further, this test piece was immersed in 150°C engine oil for 168 hours, then the weight of the test piece (weight after immersion) was measured. Further, from the weight before immersion and the weight after immersion, the following formula was followed to calculate the oil resistance (%).

$$\texttt{Oil resistance (\%)=100×(weight after immersion-weight before}$$

$$\texttt{immersion)/(weight before immersion)}$$

When the value of the oil resistance is a plus value, the test piece is swollen by the engine oil. Therefore, the lower this value, the better the oil resistance shown.

[Example 1]

(Preparation of Nitrile Rubber Latex (L1))

To the metal container equipped with a stirrer, ion exchanged water in 180 parts, a concentration 10% sodium dodecylbenzene sulfonate aqueous solution in 25 parts, acrylonitrile in 37 parts, methacrylic acid in 4 parts, and molecular weight adjuster (t-dodecylmercaptan) in 0.4 part were charged in this order. The gas inside of the container was replaced with nitrogen three times, then butadiene in 59 parts was charged. Next, the metal container was held at 5°C, the polymerization catalyst (cumen hydroperoxide) in 0.1 part was charged, then the mixture was stirred while performing a polymerization reaction for 16 hours. Further, a polymerization terminator (concentration 10% hydroquinone aqueous solution) in 0.1 part was added to stop the polymerization reaction, then a water temperature 60°C rotary evaporator was used to remove the residual monomer to thereby obtain a latex L1 (solid content concentration about 30%) (hereinafter, sometimes simply referred to as "nitrile rubber latex (L1)") of an acrylonitrile-butadiene-methacrylic acid copolymer rubber U1 (hereinafter, sometimes simply referred to as "nitrile rubber (U1)" of an acrylonitrile unit content 37%, butadiene unit content 59%, and methacrylic acid unit content 4%. The nitrile rubber (U1) had an iodine value of 277.

(Preparation of Highly Saturated Nitrile Rubber Latex)

To palladium acetate (amount of use, in terms of ratio of Pd metal/nitrile rubber (U1), 2,500 ppm), nitric acid in 5 molar equivalents of the palladium was added to obtain a palladium catalyst acidic aqueous solution. To the obtained palladium catalyst acidic aqueous solution in 300 liters, weight average molecular weight 5,000 polyvinyl pyrrolidone was added in an amount of five times the palladium. Further, a potassium hydroxide aqueous solution was added to prepare a pH 9.0 catalyst aqueous solution A.

Further, a nitrile rubber latex (L1) adjusted to a total solid content concentration of 30% in an amount of 400 liters (solid content 120 kg) and the total amount of the catalyst aqueous solution A were charged into an autoclave equipped with a stirrer. Nitrogen gas was run for 10 minutes to remove the dissolved oxygen in the latex. Next, the system was replaced with hydrogen gas two times, then was pressurized to 3 MPa of hydrogen. Next, the content was heated to 50°C and reacted for 6 hours to obtain a latex state nitrile rubber hydrogenation reaction mixture.

Next, to the above obtained latex state nitrile rubber hydrogenation reaction mixture, 30% hydrogen peroxide solution in 24 liters was added and the mixture stirred at 80°C for 2 hours to thereby oxidize it. Next, the pH of the oxidized latex state nitrile rubber hydrogenation reaction mixture was adjusted to 9.5, dimethylglyoxime corresponding to 5 molar equivalents of the palladium contained in the catalyst aqueous solution A was added as a powder, and the mixture was heated to 80°C and stirred for 5 hours, whereupon the insolubles precipitated in the latex. Next, the obtained insolubles were filtered to remove them. The obtained white filtrate was condensed in vacuo by a rotary evaporator to thereby obtain a latex S1 (hereinafter, sometimes simply referred to as "highly saturated nitrile rubber latex (S1)") of a hydrogenated nitrile rubber R1 (hereinafter, sometimes referred to as "highly saturated nitrile rubber (R1)") of a solid content concentration of 40%. The obtained highly saturated nitrile rubber (R1) had an iodine value of 7. The composition of the copolymer was similar to that of the above nitrile rubber (U1) except that the double bonds in the butadiene units were mostly hydrogenated (hydrogenated butadiene units sometimes expressed as "saturated butadiene units"). Further, the tetrahydrofuran insoluble fraction of the highly saturated nitrile rubber (R1) was 55%.

(Reference Example) Preparation of Resorcinol-Formaldehyde Resin Solution

Resorcinol in 6.5 parts, formalin (37% aqueous solution of formaldehyde) in 9.4 parts, and 10% sodium hydroxide aqueous solution in 5 parts were dissolved in water in 139.6 parts and reacted while stirring at 25°C for 6 hours to obtain a resorcinol-formaldehyde resin solution (RF solution).

[Example 2]

The highly saturated nitrile rubber latex (S1) obtained in Example 1 in 250 parts, RF solution (concentration 6.25%) in 160 parts, ammonia water (concentration 14%) in 22.6 parts, and water in 120.4 parts were mixed and stirred at 25°C for 20 hours to thereby obtain an adhesive composition (A1). The adhesive composition (A1) was measured for oil resistance. The results are shown in Table 2.

[Examples 3, 5, and 7]

Except for changing the amount of the t-dodecylmercaptan used as the chain transfer agent (molecular weight adjuster) which is used for the polymerization as shown in Table 1 and suitably changing the composition of the monomer as shown in Table 1, the same procedure was followed as in Example 1 to obtain the carboxyl group-containing nitrile rubber latexes (L2) to (L4).

Except for replacing the carboxyl group-containing nitrile rubber latex (L1) with the use of the carboxyl group-containing nitrile rubber latexes (L2) to (L4) and changing the amount of use of the hydrogenation catalyst to the amounts shown in Table 1, the same procedure was followed as in Example 1 to obtain the highly saturated nitrile rubber latexes (S2) to (S4). The characteristics of the highly saturated nitrile rubbers (R2) to (R4) obtained from these are shown in Table 1.

[Examples 4, 6, and 8]

Except for replacing the highly saturated nitrile rubber latex (S1) with the use of the highly saturated nitrile rubber latexes (S2) to (S4), the same procedure was followed as in Example 2 to obtain the adhesive compositions (A2) to (A4). These were evaluated in the same way as Example 2. The results are shown in Table 2.

[Comparative Examples 1, 3, 5, and 7]

Except for changing the amount of the t-dodecylmercaptan used as the chain transfer agent (molecular weight adjuster) which is used for polymerization as shown in Table 1 and suitably changing the composition of the monomer as shown in Table 1, the same procedure was followed as in Example 1 to obtain the carboxyl group-containing nitrile rubber latexes (LC1) to (LC4).

Except for replacing the carboxyl group-containing nitrile rubber latex (L1) with the use of carboxyl group-containing nitrile rubber latexes (LC1) to (LC4) and changing the amount of use of hydrogenation catalyst to the amounts shown in Table 1, the same procedure was followed as in Example 1 to obtain the highly saturated nitrile rubber latexes (SC1) to (SC4). The characteristics of the highly saturated nitrile rubbers (RC1) to (RC4) obtained from these are shown in Table 1.

[Comparative Examples 2, 4, 6, and 8]

Except for replacing the highly saturated nitrile rubber latex (S1) with the use of the highly saturated nitrile rubber latexes (SC1) to (SC4), the same procedure was followed as in Example 2 to obtain the adhesive compositions (AC1) to (AC4). These were evaluated in the same way as Example 2. The results are shown in Table 2.

Note that, film formation was not possible with the adhesive composition (AC1).

[Table 1]

| | Examples | | | | Comparative Examples | | | |
|---|---|---|---|---|---|---|---|---|
| | 1 | 3 | 5 | 7 | 1 | 3 | 5 | 7 |
| Monomer composition charged for polymerization | | | | | | | | |
| Acrylonitrile (parts) | 37 | 37 | 33 | 52 | 37 | 37 | 25 | 37 |

(continued)

|  | | Examples | | | | Comparative Examples | | | |
|---|---|---|---|---|---|---|---|---|---|
|  | | 1 | 3 | 5 | 7 | 1 | 3 | 5 | 7 |
| | Butadiene (parts) | 59 | 59 | 59 | 40 | 59 | 59 | 71 | 62 |
| | Methacrylic acid (parts) | 4 | 4 | 8 | 8 | 4 | 4 | 4 | 1 |
| | t-dodecylmercaptan (parts) | 0.40 | 0.45 | 0.45 | 0.42 | 0.2 | 0.65 | 0.65 | 0.75 |
| | Polymerization conversion rate (%) | 90 | 90 | 90 | 90 | 95 | 90 | 90 | 90 |
| Nitrile rubber latex | | L1 | L2 | L3 | L4 | LC1 | LC2 | LC3 | LC4 |
| | Iodine value | 277 | 277 | 277 | 188 | 277 | 277 | 333 | 291 |
| Highly saturated nitrile rubber latex | | S1 | S2 | S3 | S4 | SC1 | SC2 | SC3 | SC4 |
| Amount of use of hydrogenation catalyst ($\times$ 1,000 ppm) | | 2.5 | 1.2 | 1.2 | 1.0 | 1.2 | 1.5 | 1.2 | 1.2 |
| Highly saturated nitrile rubber | | R1 | R2 | R3 | R4 | RC1 | RC2 | RC3 | RC4 |
| | Acrylonitrile units (%) | 37 | 37 | 33 | 44 | 37 | 37 | 25 | 37 |
| | Butadiene units and saturated butadiene units (%) | 59 | 59 | 59 | 48 | 59 | 59 | 71 | 62 |
| | Methacrylic acid units (%) | 4 | 4 | 8 | 8 | 4 | 4 | 4 | 1 |
| | Iodine value | 7 | 23 | 26 | 30 | 32 | 18 | 26 | 22 |
| | Tetrahydrofuran insoluble fraction (%) | 55 | 40 | 40 | 40 | 95 | 0 | 0 | 0 |

[Table 2]

|  | Examples | | | | Comparative Examples | | | |
|---|---|---|---|---|---|---|---|---|
|  | 2 | 4 | 6 | 8 | 2 | 4 | 6 | 8 |
| Highly saturated nitrile rubber latex | S1 | S2 | S3 | S4 | SC1 | SC2 | SC3 | SC4 |
| Adhesive composition | A1 | A2 | A3 | A4 | AC1 | AC2 | AC3 | AC4 |
| Oil resistance (%) | 9 | 13 | 14 | 13 | - | 19 | 25 | 22 |

From the results of Table 2, it is learned that when the tetrahydrofuran insoluble fraction is larger than the range prescribed by the present invention, the adhesive composition does not form a film (Comparative Examples 1 and 2), while when the tetrahydrofuran insoluble fraction is smaller than the range prescribed by the present invention, the oil resistance is poor (Comparative Examples 3 to 8).

As opposed to this, the cured product of the adhesive composition of the present invention which has a predetermined tetrahydrofuran insoluble fraction is excellent in oil resistance (Examples 1 to 8). For this reason, it can be said that by using the adhesive composition of the present invention, it is possible to obtain a fiber base material-highly saturated nitrile rubber composite which is excellent in oil resistance.

## Claims

1.    An adhesive composition containing a latex of a highly saturated nitrile rubber, wherein
said latex of highly saturated nitrile rubber is obtained by copolymerizing $\alpha,\beta$-ethylenically unsaturated nitrile monomer, acid-group-containing $\alpha,\beta$-ethylenically unsaturated monomer, and diene and/or $\alpha$-olefin, and another monomer, used in accordance with need, able to copolymerize with these monomers, in the presence of molecular weight adjuster in an amount of 0.25 to 0.55 parts by weight, with respect to 100 parts by weight of the total monomer which is used for copolymerization, and
said highly saturated nitrile rubber comprises $\alpha,\beta$-ethylenically unsaturated nitrile monomer units in 30 to 55 wt%,

acid-group-containing $\alpha,\beta$-ethylenically unsaturated monomer units in 3 to 20 wt%, wherein an iodine value is 120 or less, and a tetrahydrofuran insoluble fraction is 30 to 70 wt%.

2. The adhesive composition as set forth in claim 1, wherein said acid-group-containing $\alpha,\beta$-ethylenically unsaturated monomer units are $\alpha,\beta$-ethylenically unsaturated monomer units which have carboxyl groups.

3. The adhesive composition as set forth in claim 1 or 2, wherein said latex of highly saturated nitrile rubber is obtained by hydrogenating a latex of nitrile rubber which is obtained by emulsion polymerization.

4. The adhesive composition as set forth in any one of claims 1 to 3 further containing a resorcinol-formaldehyde resin.

5. The adhesive composition as set forth in any one of claims 1 to 4 wherein the content of said resorcinol-formaldehyde resin is 5 to 30 parts by weight with respect to 100 parts by weight of solid content of said latex of the highly saturated nitrile rubber.

**Patentansprüche**

1. Klebstoffzusammensetzung, die einen Latex von hochgesättigtem Nitrilkautschuk enthält, wobei
der Latex von hochgesättigtem Nitrilkautschuk durch Copolymerisieren von $\alpha,\beta$-ethylenisch ungesättigtem Nitrilmonomer, Säuregruppe-enthaltendem $\alpha,\beta$-ethylenisch ungesättigtem Monomer und Dien und/oder $\alpha$-Olefin und einem anderen Monomer, das nach Bedarf verwendet wird, das fähig ist, mit diesen Monomeren zu copolymerisieren, in Gegenwart eines Molekulargewicht-Einstellmittels in einer Menge von 0,25 bis 0,55 Gewichtsteilen, bezogen auf 100 Gewichtsteile des gesamten Monomers, das zur Copolymerisation eingesetzt wird, erhalten wird, und
der hochgesättigte Nitrilkautschuk $\alpha,\beta$-ethylenisch ungesättigte Nitrilmonomereinheiten in 30 bis 55 Gew.-%, Säuregruppe-enthaltende $\alpha,\beta$-ethylenisch ungesättigte Monomereinheiten in 3 bis 20 Gew.-% umfasst, wobei die Iodzahl 120 oder weniger ist und die in Tetrahydrofuran unlösliche Fraktion 30 bis 70 Gew.-% ist.

2. Klebstoffzusammensetzung gemäß Anspruch 1, wobei die Säuregruppe-enthaltenden $\alpha,\beta$-ethylenisch ungesättigten Monomereinheiten $\alpha,\beta$-ethylenisch ungesättigte Monomereinheiten, die Carboxylgruppen haben, sind.

3. Klebstoffzusammensetzung gemäß Anspruch 1 oder 2, wobei der Latex von hochgesättigtem Nitrilkautschuk erhalten wird, indem ein Latex von Nitrilkautschuk, der durch Emulsionspolymerisation erhalten wird, hydriert wird.

4. Klebstoffzusammensetzung gemäß einem der Ansprüche 1 bis 3, die außerdem ein Resorcin-Formaldehyd-Harz enthält.

5. Klebstoffzusammensetzung gemäß einem der Ansprüche 1 bis 4, wobei der Gehalt an Resorcin-Formaldehyd-Harz 5 bis 30 Gewichtsteile, bezogen auf 100 Gewichtsteile des Feststoffgehalts des Latex des hochgesättigten Nitrilkautschuks, ist.

**Revendications**

1. Composition d'adhésif contenant un latex d'un caoutchouc nitrile hautement saturé, dans laquelle
ledit latex de caoutchouc nitrile hautement saturé est obtenu par la copolymérisation d'un monomère de nitrile à saturation $\alpha,\beta$-éthylénique, d'un monomère à saturation $\alpha,\beta$-éthylénique contenant un groupe acide et d'un diène et/ou d'une $\alpha$-oléfine, et d'un autre monomère, utilisé selon les besoins, capable de se copolymériser avec ces monomères, en présence d'un agent d'ajustement de poids moléculaire en une quantité de 0,25 à 0,55 partie en poids, par rapport à 100 parties en poids du monomère total qui est utilisé pour la copolymérisation, et
ledit caoutchouc nitrile hautement saturé comprend des motifs monomères de nitrile à saturation $\alpha,\beta$-éthylénique à raison de 30 % à 55 % en poids, des motifs monomères à saturation $\alpha,\beta$-éthylénique contenant un groupe acide à raison de 3 % à 20 % en poids, dans lequel l'indice d'iode est inférieur ou égal à 120 et une fraction insoluble dans le tétrahydrofuranne est de 30 % à 70 % en poids.

2. Composition d'adhésif selon la revendication 1, dans laquelle lesdits motifs monomères à saturation $\alpha,\beta$-éthylénique contenant un groupe acide sont des motifs monomères à saturation $\alpha,\beta$-éthylénique qui contiennent des groupes carboxyle.

**3.** Composition d'adhésif selon la revendication 1 ou 2, dans laquelle ledit latex de caoutchouc nitrile hautement saturé est obtenu par l'hydrogénation d'un latex de caoutchouc nitrile qui est obtenu par polymérisation en émulsion.

**4.** Composition d'adhésif selon l'une quelconque des revendications 1 à 3, contenant en outre une résine de résorcinol-formaldéhyde.

**5.** Composition d'adhésif selon l'une quelconque des revendications 1 à 4, dans laquelle la teneur en résine de résorcinol-formaldéhyde susmentionnée est de 5 à 30 parties en poids par rapport à 100 parties en poids de la teneur en solide dudit latex de caoutchouc nitrile hautement saturé.

**EP 2 457 933 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0747458 A
- EP 0704459 A
- JP 63248879 A
- US 5017639 A
- JP 55142635 A